## Europäisches Patentamt
## European Patent Office
## Office européen des brevets

(19)

(11) Veröffentlichungsnummer: **0 071 718**
**B1**

(12) **EUROPÄISCHE PATENTSCHRIFT**

(45) Veröffentlichungstag der Patentschrift:
**20.11.86**

(51) Int. Cl.⁴: **C 08 L 27/06**

(21) Anmeldenummer: **82105184.4**

(22) Anmeldetag: **14.06.82**

(54) **Polyvinylchloridformmasse, Verfahren zu deren Herstellung und Verwendung der Polyvinylchloridformmassen.**

(30) Priorität: **10.08.81 DE 3131609**

(43) Veröffentlichungstag der Anmeldung:
**16.02.83 Patentblatt 83/7**

(45) Bekanntmachung des Hinweises auf die Patenterteilung:
**20.11.86 Patentblatt 86/47**

(84) Benannte Vertragsstaaten:
**BE DE FR GB IT NL SE**

(56) Entgegenhaltungen:
**CA - A - 975 890**
**CA - A - 975 891**
**FR - A - 2 277 854**

(73) Patentinhaber: **HÜLS AKTIENGESELLSCHAFT,**
**Patentabteilung / PB 15 - Postfach 13 20,**
**D-4370 Marl 1 (DE)**

(72) Erfinder: **Flatau, Karsten, Dr., An Der Mühlenstege 22,**
**D-4358 Haltern (DE)**

ACTORUM AG

## Beschreibung

Die Herstellung von Polyvinylchloridfolien nach dem Luvithermverfahren ist bekannt (Kunststoff Handbuch, Bd. II, Carl Hanser, Verlag München 1963, Teil 1, Seite 140 ff.). Die compoundierte PVC-Masse wird bei relativ niedrigen Temperaturen (150 bis 190 °C) kalandriert, d. h., durch Walzen zu einer Folie gepresst, welche noch nicht durchplastifiziert ist. In einer zweiten Stufe wird diese Folie, welche nur eine geringe mechanische Festigkeit hat, durch kurzzeitige Behandlung bei höheren Temperaturen versintert und in einer weiteren Stufe durch Recken vergütet.

Nicht modifiziertes PVC lässt sich nur mit geringen Abzugsgeschwindigkeiten verarbeiten. Aus wirtschaftlichen Gründen ist es erstrebenswert, die Verarbeitungsgeschwindigkeit bei der Folien-Herstellung aus Emulsionspolyvinylchlorid nach dem Luvithermverfahren zu erhöhen, ohne dass gleichzeitig die Qualität und insbesondere die Oberflächengüte der Folien beeinträchtigt wird.

Zur Verbesserung der Verarbeitbarkeit von Polyvinylchlorid allgemein hat sich der Zusatz geringer Mengen an Acrylat- oder Methacrylat-Polymerisaten bewährt.

So ist es bekannt, Pfropfcopolymerisate, die aus einem kautschukartigen, unvernetzten Acrylester-Polymerisat als Pfropfgrundlage und Methylmethacrylat, einem Acrylat und/oder Styrol als Pfropfreis bestehen, als Kalandrierhilfsmittel einzusetzen (DE-OS 2 135 024).

Die Verarbeitbarkeit von Emulsions-Polyvinylchlorid nach dem Luvithermverfahren lässt sich mit derartigen Pfropfcopolymerisaten jedoch nicht verbessern (DE-AS 2 624 656, Spalte 2, Zeilen 18 bis 21).

In der DE-AS 2 624 656 sind Pfropfmischpolymerisate beschrieben, welche sich als Verarbeitungshilfsmittel (Modifier) für Vinylchloridpolymerisate eignen, die im Luvithermverfahren eingesetzt werden sollen. Diese Pfropfmischpolymeren sind vergleichsweise kompliziert aufgebaut und somit nur mit grösserem Aufwand herstellbar.

Es sind zwar aus der CA-A-975 890 Pfropfpolymerisate bekannt, welche als Verarbeitungshilfsmittel für Polyvinylchlorid bestimmt und aus mindestens zwei verschiedenen Monomeren aufgebaut sind, welche Polymere mit unterschiedlichen Glasübergangstemperaturen bilden. Diese Verarbeitungshilfsmittel sollen jedoch in 1. Stufe aus einem sehr geringen Anteil (1 bis 30 Gewichtsprozent) Monomerer, welche weiche Polymere bilden (Glasübergangstemperatur $\leq$ 60 °C), und in 2. Stufe aus einem stark überwiegenden Anteil (99 bis 70 Gewichtsprozent) solcher Monomerer hergestellt werden, welche harte Polymere bilden (Glasübergangstemperatur höher als das Monomere der 1. Stufe und $\geq$ 25 °C).

Verglichen mit den erfindungsgemäss einzusetzenden Verarbeitungshilfsmitteln zielt die Lehre der CA-A-975 890 in die entgegengesetzte Richtung, da gemäss der Erfindung die Monomeren, welche weiche bzw. harte Polymere bilden, mengenmässig den umgekehrten Rang einnehmen.

Die CA-A-975 890 beschreibt somit vergleichsweise harte Polymerisationshilfsmittel, die durch Sprühtrocknung isolierbar sein und beim Lagern nicht agglomerieren sollen (1. c. Seite 4, Zeilen 7 bis 11). Durch Zusatz derartig harter Pfropfpolymerer kann die Verarbeitbarkeit beim Luvithermverfahren nicht verbessert werden.

Der Erfindung liegt die Aufgabe zugrunde, eine Polyvinylchloridformmasse für die Verarbeitung nach dem Luvithermverfahren herzustellen, das eine geringe Menge eines einfach aufgebauten Verarbeitungshilfsmittels (Modifier), welches leicht herstellbar ist, enthält, wobei der Modifier von vornherein im Polyvinylchlorid enthalten ist und nicht erst vor der Verarbeitung zugemischt werden muss. Die aus der Polyvinylchloridformmasse erhaltenen Folien sollen mit hoher Geschwindigkeit herstellbar sein, wobei die Folien trotz der hohen Verarbeitungsgeschwindigkeit eine sehr gute Qualität und insbesondere eine glänzende und glatte Oberfläche aufweisen sollen.

Diese Aufgabe wird erfindungsgemäss gelöst durch eine Polyvinylchloridformmasse, ein Verfahren zu deren Herstellung und die Verwendung der Polyvinylchloridformmasse, wie sie in den Patentansprüchen beschrieben werden. Unter Emulsions-Polyvinylchlorid im Sinne der Erfindung sind sowohl die Homo- als auch Copolymerisate des Vinylchlorids zu verstehen. Die Homopolymerisate des Vinylchlorids sollen dabei vorzugsweise einen K-Wert von 70 bis 85, insbesondere von 75 bis 83 (DIN 53 736), besitzen.

Die Copolymerisate des Vinylchlorids können bis zu 30 Gewichtsprozent, vorzugsweise bis zu 15 Gewichtsprozent an anderen mit Vinylchlorid copolymerisierbaren Monomeren, wie Vinylacetat oder Vinylidenchlorid enthalten. Die Homopolymerisate des Vinylchlorids werden im allgemeinen bevorzugt.

Das erfindungsgemäss einzusetzende Emulsions-Polyvinylchlorid wird durch Polymerisation der Monomeren in wässriger Emulsion nach den üblichen und bekannten Verfahren hergestellt. Die Polymerisation erfolgt kontinuierlich oder diskontinuierlich im allgemeinen bei Temperaturen im Bereich von 30 bis 75 °C in Gegenwart wasserlöslicher Initiatoren unter Mitverwendung der üblichen Zusatz- und Hilfsstoffe, wie beispielsweise Emulgatoren. Die Verfahren zur Emulsionspolymerisation des Vinylchlorids sowie die hierzu eingesetzten verschiedenen Hilfsstoffe und Katalysatoren sind ausführlich in der Monographie von H. Kainer Polyvinylchlorid und Vinylchlorid-Mischpolymerisate, Springer Verlag (1965), Seiten 34 bis 59, beschrieben.

Die erfindungsgemässen Polyvinylchlorid-Formmassen enthalten 0,5 bis 3 Gewichtsprozent, insbesondere 0,8 bis 2,0 Gewichtsprozent, bezogen auf die gesamte Formmasse der Copolymerisate als Verarbeitungshilfsmittel. Zusätzlich kann die Formmasse noch die bekannten Zusatzstoffe, wie übliche Gleitmittel, Stabilisatoren, Treibmittel, Füllstoffe, Pigmente und Farbstoffe enthalten. Vorzugsweise werden weichmacherfreie Vinylchlorid-Polymerisate eingesetzt und zu Hart-Folien verarbeitet. Die Polyvinylchloridformmasse kann jedoch auch geringe Mengen an üblichen Weichmachern enthalten.

Die Verarbeitungshilfsmittel bestehen zu 40 bis 90 Gewichtsprozent aus Vinylmonomeren, die Polymere mit einer Glastemperatur unterhalb 0 °C bilden, wie z.B. Acrylsäureester mit 4 bis 12 C-Atomen im Alkoholteil. Dazu gehören u.a. Acrylsäurebutylester, Acrylsäurehexylester, Octylacrylat, Acrylsäure-2-Ethylhexylester, Acrylsäuredecylester, Acrylsäurelaurylester. Die Verarbeitungshilfsmittel bestehen weiterhin zu 10 bis 60 Gewichtsprozent aus Vinylmonomeren, die Polymere mit Glastemperatur oberhalb 20 °C bilden, wie z.B. Styrol, C-Methylstyrol, Vinylchlorid oder Acrylnitril.

Es ist im höchsten Masse überraschend, dass Acrylat-Polymerisate sich als geeignet erwiesen haben, denn in der DE-AS 2 624 656, Spalte 2, Zeilen 18 bis 21 wird vom Einsatz von Acrylat-Polymeren als Verarbeitungshilfsmittel für Polyvinylchlorid für das Luvithermverfahren ausdrücklich abgeraten.

Die Copolymeren können durch übliche Emulsionspolymerisation nach batch- oder Zulaufverfahren in Gegenwart der bei der Emulsionspolymerisation üblichen Emulgatoren, Initiatoren und gegebenenfalls sonstigen Polymerisationshilfsmittel bei Temperaturen zwischen 60 und 80 °C hergestellt werden. Derartige Polymerisationsverfahren sind in F. Hölscher, Dispersionen synthetischer Hochpolymerer, Teil I, Eigenschaften, Herstellung, Prüfung, Springer Verlag, 1969 beschrieben.

Die Latices können Feststoffgehalte von 20 bis 50%, vorzugsweise 30 bis 45% enthalten. Die Latexteilchen können einen Schalenaufbau aufweisen oder die Vinylmonomeren gleichmässig verteilt enthalten. Der Schalenaufbau wird bekanntlich durch stufenweise Polymerisation erzielt.

Es werden 0,5 bis 3 Gewichtsprozent, bezogen auf Polyvinylchlorid, der Copolymeren eingesetzt. Die Copolymer-Latices können mit dem Polyvinylchlorid-Latex vermischt werden. Das Dispersionsgemisch kann dann gemeinsam unter Bedingungen, wie sie bei der Trocknung von Emulsions-Polyvinylchlorid-Dispersionen üblich sind, z.B. durch Verdüsung, zu einem rieselfähigen, modifizierten Emulsions-Polyvinylchlorid aufgearbeitet werden.

Die Menge an Verarbeitungshilfsmittel kann nachträglich variiert werden, wenn man, ausgehend von einem Produkt mit höherem Gehalt an Copolymeren, die erfindungsgemässe Emulsionspolyvinylchloridmasse mit nicht modifiziertem Emulsionspolyvinylchlorid abmischt. Der Verarbeiter kann so im Hinblick auf die bei ihm gegebenen Verarbeitungsbedingungen die optimale Menge an Verarbeitungsmittel auch nachträglich einstellen.

Die Erfindung wird durch die folgenden Beispiele erläutert:

Herstellung des Copolymerlatex (Verarbeitungshilfsmittel)

In einem 150-l-Polymerisationsbehälter werden 73,5 kg Wasser, 2% (bezogen auf Monomergemisch) Alkylsulfonat als Emulgator und 0,2% (bezogen auf Monomergemisch) Kaliumpersulfat als Initiator vorgelegt.

In die auf 60 °C erwärmte Vorlage wird ein Monomergemisch aus 9,9 kg Styrol und 23,1 kg Acrylsäurebutylester gleichmässig eingegeben.

Es resultiert ein Copolymerlatex mit 30% Feststoffgehalt.

Herstellung eines Emulsions-Polyvinylchlorids

In einen mit Mantelkühler und Blattrührer ausgestatteten Autoklav von 13 m³ Fassungsvermögen werden stündlich eingegeben: ca. 776 kg Vinylchlorid, 690 l einer wässrigen Lösung, die 2 Gewichtsprozent eines Alkansulfonats (Alkylketten enthalten 10–18 Kohlenstoffatome, im Mittel 15 Kohlenstoffatome) und 2 kg Phosphorsäure enthält, 24 l einer 0,25 gewichtsprozentigen wässrigen Wasserstoffperoxydlösung (~ 0,008 Gewichtsprozent, bezogen auf Vinylchlorid), 24 l einer 0,1 gewichtsprozentigen wässrigen Ascorbinsäurelösung (0,003 Gewichtsprozent, bezogen auf Vinylchlorid); der Füllgrad beträgt dabei wie üblich ca. 90%. Der pH-Wert beträgt 6,3. Die Polymerisationstemperatur wird auf 50 °C gehalten. Der Umsatz beträgt ca. 91 Gewichtsprozent. Man erhält eine stabile Dispersion mit einem Feststoffgehalt von ca. 45%.

Herstellung einer Polyvinylchloridformmasse

500 kg der so hergestellten, 45 Gewichtsprozent Feststoff enthaltenden, alkalisch vorstabilisierten Polyvinylchlorid-Dispersion wurden mit 15 kg des beschriebenen Copolymerlatex vermischt. Das Dispersionsgemisch wurde durch Sprühtrocknung zu einem rieselfähigen Produkt aufgearbeitet. Die Formmasse enthält 2,0 Gewichtsprozent des Copolymeren.

Die Wärmeformbeständigkeit und die Thermostabilität des modifizierten Emulsionspolyvinylchlorids haben sich dabei gegenüber den entsprechenden Eigenschaften des nicht modifizierten Emulsions-Polyvinylchlorids nicht verändert. Das Produkt hat einen K-Wert von 78.

Verarbeitungsversuch

Auf einer dem Stand der Technik entsprechenden Verarbeitungseinheit, wie sie in H. Sachtling, Kunststoff-Taschenbuch, Carl Hauser Verlag, 1979, S. 161; 245 beschrieben ist, zur Herstellung von Polyvinylchlorid-Folien nach dem Luvithermverfahren, bestehend aus Kalander, Luvithermstation mit Abzugswalzen und Reckstation, wird eine Polyvinylchloridmasse verarbeitet, welche aus

100 Gewichtsprozent nach dem o.a. Verfahren hergestellten Polyvinylchloridformmasse,
0,7 Gewichtsprozent Stabilisator,
4 Gewichtsprozent Wachs

besteht.

Man erreicht bei dem für die Herstellung von Luvithermfolien üblichen Temperaturprogramm (Saechtlich, Kunststoff-Taschenbuch, Carl Hauser Verlag 1979, S. 245) Abzugsgeschwindigkeiten nach der Reckstation von 120 bis 130 m/min. Setzt man entsprechend nicht modifiziertes Polyvinylchlorid ein, so werden Abzugsgeschwindigkeiten von 90 bis 100 m/min (nach der Reckstation) erreicht, d.h. die Verarbeitungsgeschwindigkeit erhöht sich durch die erfindungsgemässe Modifizierung um mehr als 20%. Dies ist im höchsten Masse überraschend, da gemäss DE-AS 2 624 656, Spalte 2, Zeilen 18 bis 21, vom Einsatz von Acrylat-Polymeren als Verarbeitungshilfsmittel für Emulsions-Polyvinylchlorid für das Luvithermverfahren ausdrücklich abgeraten wird.

**Patentansprüche**

1. Polyvinylchloridformmasse, geeignet zur Folienherstellung nach dem Luvithermverfahren, bestehend aus Emulsionspolyvinylchlorid, Copolymerisaten als Verarbeitungshilfsmittel und gegebenenfalls üblichen Zusätzen, dadurch gekennzeichnet, dass die Formmasse 0,5 bis 3,0 Gewichtsprozent eines Copolymerisates als Verarbeitungshilfsmittel enthält, welches zu 40 bis 90 Gewichtsprozent aus Vinylmonomeren besteht, die Polymere mit einer Glasübergangstemperatur unterhalb 0 °C bilden, und zu 10 bis 60 Gewichtsprozent aus solchen Vinylmonomeren, die Polymere mit einer Glasübergangstemperatur oberhalb 20 °C bilden.

2. Verfahren zur Herstellung einer Polyvinylchloridformmasse nach den Ansprüchen 1 und 2, dadurch gekennzeichnet, dass der Latex des Emulsionspolyvinylchlorids und der Latex des Copolymerisates miteinander gemischt werden und die erhaltene Mischung durch Sprühtrocknung aufgearbeitet wird.

3. Verwendung einer Polyvinylchloridformmasse nach Anspruch 1 zur Herstellung von Folien nach dem Luvithermverfahren.

4. Verwendung einer Polyvinylchloridformmasse nach Anspruch 2 zur Herstellung von Folien nach dem Luvithermverfahren.

**Claims**

1. A polyvinylchloride moulding composition suitable for the production of sheeting by the Luvitherm process, comprising polyvinylchloride obtained by emulsion polymerisation, a copolymer as a processing assistant and optionally one or more conventional additives, characterised in that the moulding composition contains as processing assistant 0.5 to 3.0 per cent by weight of a copolymer which consists to the extent of 40 to 90 per cent by weight of one or more vinyl monomers which form polymers having a glass transition temperature below 0 °C and to the extent of 10 to 60 per cent by weight of one or more such vinyl monomers which form polymers having a glass transition temperature above 20 °C.

2. A process for the production of a polyvinylchloride moulding composition according to claim 1, characterised in that the latex of the emulsion polymer of vinyl chloride and the latex of the copolymer are mixed with one another and the resulting mixture is processed by spray drying.

3. The use of a polyvinylchloride moulding composition according to claim 1 for the production of sheeting by the Luvitherm process.

4. The use of a polyvinylchloride moulding composition according to claim 2 for the production of sheeting by the Luvitherm process.

**Revendications**

1. Masse à mouler de polychlorure de vinyle convenant à la fabrication de feuilles selon le procédé Luvitherm, formée de polychlorure de vinyle d'émulsion, de produits de copolymérisation en tant qu'adjuvants de transformation et éventuellement d'additifs usuels, caractérisé par le fait que la masse à mouler contient comme adjuvant de transformation de 0,5 à 3,0% en poids d'un produit de copolymérisation qui est formé à raison de 40 à 90% en poids de monomères vinyliques qui forment des polymères ayant une température de transition vitreuse inférieure à 0 °C et à raison de 10 à 60% en poids de monomères vinyliques qui forment des polymères ayant une température de transition vitreuse supérieure à 20 °C.

2. Procédé pour la fabrication d'une masse à mouler de polychlorure de vinyle selon la revendication 1, caractérisé par le fait que l'on mélange entre eux le latex du polychlorure de vinyle d'émulsion et le latex du produit de copolymérisation et que l'on traite le mélange obtenu par séchage par pulvérisation.

3. L'utilisation d'une masse à mouler de polychlorure de vinyle selon la revendication 1, pour la fabrication de feuilles selon le procédé Luvitherm.

4. L'utilisation d'une masse à mouler de polychlorure de vinyle selon la revendication 2, pour la fabrication de feuilles selon le procédé Luvitherm.